# EUROPEAN PATENT APPLICATION

(11) **EP 3 936 480 A1**
(43) Date of publication of application: **12.01.2022**
(21) Application number: 20184994.0
(22) Date of filing: 09.07.2020
(51) Int. Cl.: C01G 31/02, C03C 17/25, C08K 3/00

(54) **CRYSTALLINE MONOCLINIC VO2 PREPARATION**

(71) Applicant: Nederlandse Organisatie voor toegepast- natuurwetenschappelijk Onderzoek TNO, 2595 DA 's-Gravenhage (NL); Chemelot Scientific Participations B.V., 6167 RD Geleen (NL)
(72) Inventor: BUSKENS, Pascal Jozef Paul, 2595 DA 's-Gravenhage (NL); VROON, Zeger Alexander Eduard Pieter, 2595 DA 's-Gravenhage (NL); MANN, Daniel Enrico, 2595 DA 's-Gravenhage (NL); LEUFKENS, Luc, 2595 DA 's-Gravenhage (NL); VAN ZANDVOORT, Ryan Ida Henricus, 2595 DA 's-Gravenhage (NL); HABETS, Arnoldus Dominicus Maria Roberto, 2595 DA 's-Gravenhage (NL); YEUNG, Cindy Po Keh, 2595 DA 's-Gravenhage (NL)
(74) Representative: V.O.

(57) **Abstract**

The disclosure pertains to methods for the preparation of crystalline monoclinic VO₂. In a described method, amorphous VO₂ is annealed in an oxygen-containing atmosphere to give crystalline monoclinic VO₂.

## Description

### Field

The invention pertains to thermochromic materials, and in particular to methods for the preparation of crystalline monoclinic VO₂ (M).

### Introduction

Vanadium (IV) oxide (VO₂) is known as being able to undergo a fully reversible metal-to-semiconductor phase transition between a low temperature monoclinic phase VO₂ (M) and a high temperature rutile phase VO₂(R). The rutile phase is a semi-metal, reflecting and/or absorbing a wide range of solar wavelengths in the infrared. The monoclinic phase is a semiconductor and reflects and/or absorbs considerably less solar infrared light. It has been suggested to use VO₂ in window coatings to obtain glass windows for buildings which block more (near) infrared from sunlight with increasing temperatures. This can advantageously be used to decrease energy consumption for cooling of buildings with windows. The thermochromic switching temperature of VO₂ (M) is 68°C. Doping with metal ions can be used to decrease the switching temperature e.g. to 10-30°C.

Shiskin et al. Sensors and Actuators B 108 (2005) p. 113-118 describes the decomposition of vanadyl oxalate to VO₂, wherein the vanadyl oxalate is obtained by heating a mixture of V₂O₅ in oxalic acid. The subsequent annealing occurred under a nitrogen atmosphere at temperatures in the range of 375 - 825°C (650 - 1100 K).

There remains a desire for better methods for preparing crystalline monoclinic VO₂, for instance methods which can be used on a larger scale (above 100 mg per batch or above 500 mg per batch in case of a batch method).

There remains a desire for thermochromic materials that when applied as a coating on window glass provide for energy savings for buildings; as well as for such coatings, coated articles, and windows.

### Summary

The invention pertains in a first aspect to a method for preparing crystalline monoclinic VO₂ (M), wherein the method comprises annealing amorphous VO₂ in the presence of an oxygen-containing atmosphere at a temperature of at least 200°C.

The invention also pertains to crystalline monoclinic VO₂ (M) obtainable by the process of the invention.

### Detailed description

Certain known preparation methods yield amorphous VO₂ which does not exhibit thermochromic characteristics. The present invention provides in an aspect for a method of transforming such amorphous VO₂ into crystalline monoclinic VO₂ (M) with advantageous thermochromic properties. The present invention hence provides a preparation method for a thermochromic material comprising crystalline monoclinic VO₂ (M). The material exhibits thermochromic properties for one or more wavelengths in the solar IR (750 - 2500 nm). The obtained crystalline monoclinic VO₂ (M) is for instance monoclinic at 20°C.

In the present invention, this transformation is achieved using annealing, in particular using annealing in the presence of O₂. The present invention pertains to a preparation method comprising annealing of amorphous VO₂ into crystalline monoclinic VO₂ (M). The annealing comprises an annealing step performed e.g. at a temperature of at least 200°C, or at least 250°C, or at least 300°C, or at least 310°C, or at least 320°C, and for instance under an atmosphere containing 0.10 to 100 vol.% O₂, for instance at least 1.0 vol.% O₂, above 5.0 vol.% O₂, at least 6.0 vol.% O₂, at least 10 vol.% O₂, or at least 15 vol.% O₂, e.g. under air, and for instance for a duration of at least 10 seconds, e.g. at least 60 seconds, or at least 120 seconds, or at least 5 minutes, typically less than 10 hours. The annealing is performed e.g. with a maximum temperature of 600°C, or e.g. maximum 500°C, max. 450°C, or max 400°C. The annealing is performed e.g. with a temperature in the range of 300 - 600°C, e.g. 320 - 600°C, or e.g. in the range 300 - 450°C or 310 - 450°C. The atmosphere contains e.g. at least 50 vol.% inert gas such as N₂ or at least 70 vol.% inert gas e.g. N₂.

In some embodiments, the annealing comprises a step carried out at an oxygen level of at least 6.0 vol.% and at a temperature above 320°C and with a duration of at least 10 seconds. In some embodiments, the entire annealing is performed under an atmosphere comprising at least 0.10 vol.%, at least 1.0 vol.%, or at least 5.0 vol.% O₂. In some embodiments, the annealing consists of one step (one step procedure).

The product is crystalline monoclinic VO₂ (M) and is for instance obtained after cooling to a temperature lower than 30°C.

The annealing step may also be identified as a thermal treatment step.

The inventive preparation method provides the advantage that a curing step under inert gas with less than 0.10 vol.% O₂ is not necessary.

Advantageously, energy intensive and costly steps such as sputtering and curing under substantially oxygen-free inert atmosphere can be avoided. Furthermore, the use of certain highly toxic reactants, such as hydrazine can be avoided advantageously.

Advantageously, in preferred embodiments oxidation of vanadium (IV) to vanadium (V) can be avoided.

The produced crystalline monoclinic VO₂ (M) preferably exhibits a switching enthalpy for the first order phase transition of VO₂ (M) to VO₂ (R), that is at least 20% or at least 40% or at least 60% of the switching enthalpy of pure VO₂ (M) for said transition of VO₂ (M) to VO₂ (R), as measured e.g. with DSC (differential scanning calorimetry).

The amorphous VO₂ is for instance provided as a particulate material, e.g. as a powder. In such embodiments, the produced crystalline monoclinic VO₂ (M) is for instance as a powder. Such monoclinic VO₂ (M) powder may be used as a thermochromic infrared (IR) pigment or for preparing such a pigment.

The method is optionally a batch method and the amount of powder is e.g. at least 1.0 g per batch.

The invention also pertains to the crystalline monoclinic VO₂ (M) material obtained by, or obtainable with, the inventive method for preparing crystalline monoclinic VO₂ (M). In some embodiments, the produced crystalline monoclinic VO₂ (M) is a thermochromic material in granular or particulate form. The crystalline monoclinic VO₂ thermochromic material in granular or particulate form is for instance a pigment composition or can be used as pigment composition. The thermochromic material is for instance a powder. In an embodiment the thermochromic material, or the produced crystalline monoclinic VO₂ (M) material, is in particulate form. The invention also pertains to an article comprising the thermochromic material in granular or particulate form, e.g. comprising particles of thermochromic material. The article is e.g. a film. The film comprises the particles of the thermochromic material and a matrix, preferably a polymer matrix. The film is for instance a single layer film or a multi-layer film. The film comprises e.g. a layer comprising particles of the thermochromic material and a matrix and optionally additional layers, these layers are e.g. laminated. The additional layers e.g. include a polymer film.

The film comprising crystalline monoclinic VO₂ thermochromic material is e.g. adhesive or self-adhesive. The film is e.g. prepared by a method comprising a step of casting a slurry comprising a liquid phase, a polymer, and particles of the crystalline monoclinic VO₂ thermochromic material; the slurry may comprise additional particles. The cast film is e.g. laminated with other films to produce a laminated film comprising particles of the thermochromic material. The invention also pertains to such a method of preparing a film using the crystalline monoclinic VO₂ material.

The film is for instance applied to glass windows and glass panels. The glass panel with the applied film is for instance used for renovating buildings.

In some embodiments of the inventive method for preparing crystalline monoclinic VO₂ (M), the amorphous VO₂ starting material is for instance provided as a coating layer on a substrate. The substrate is or comprises e.g. glass, such as float glass. The coating is for instance a single layer coating. The substrate is typically thermostable. The present invention also pertains to a method for preparing a coated article, wherein the coated article comprises a substrate and a coating, preferably a single layer coating, wherein the single layer coating or a layer of a multiple layer coating comprises or consists of crystalline monoclinic VO₂ obtained with or obtainable by the method for preparing crystalline monoclinic VO₂ (M) of the invention.

In an embodiment, the method for preparing crystalline monoclinic VO₂ (M) comprises dispersing amorphous VO₂ powder in a liquid to provide a dispersion, preferably using a stabilization agent, e.g. PVP (polyvinylpyrrolidone), and applying the dispersion on a substrate, preferably a glass substrate; and a subsequent step of the described annealing. The dispersion can be applied on the substrate using e.g. dip coating, roll coating, or other suitable coating methods. The annealing is conducted subsequently to the step of applying the dispersion. One or more optional steps may be conducted between applying the dispersion and the annealing, such as drying the coated substrate.

The substrate comprises for instance a non-crystalline, amorphous solid. The substrate is preferably transparent for IR (750 - 2500 nm) and visible light. The substrate comprises e.g. SiO₂. The substrate is for instance float glass. The substrate, e.g. the glass panel, has for instance a width of at least 0.10 m or at least 0.5 m and a length of at least 0.10 m or at least 0.50 m. The substrate has e.g. at least one side with a surface area of at least 0.10 m². The substrate for instance comprises silica. The substrate is for instance a glass substrate.

The method for preparing crystalline monoclinic VO₂ (M) may optionally also involve one or more steps of preparing the amorphous VO₂ that is annealed. In some embodiments, the optional step of preparing the amorphous VO₂ involves preparing a vanadium (IV) complex solution from a vanadium (V) precursor, a reducing agent, and a solvent. The reducing agent is for instance a carboxylic acid. The reducing agent is for instance oxalic acid or an alpha hydroxy acid, e.g. citric acid (2-hydroxypropane-1,2,3-tricarboxylic acid) or malic acid.

The solvent is or comprises for instance water. The preparation step may further involve allowing the vanadium(V) precursor and the reducing agent to react to form a vanadium (IV) complex solution. The preparation step may involve precipitating amorphous VO₂ from the vanadium (IV) complex solution, e.g. as powder, using for instance a solvothermal reaction. The solvothermal reaction is conducted e.g. at a temperature of. above 150°C and less than 400°C and/or e.g. a pressure of at least 10 bar, typically less than 100 bar. The pressure can be autogenerated e.g. in an autoclave.

In some embodiments, the optional step of preparing the amorphous VO₂ involves preparing a vanadium (IV) complex solution from a vanadium (IV) precursor and a complexing agent. The complexing agent is e.g. an alcohol.

The invention also pertains to crystalline monoclinic VO₂ (M) obtainable by the process of the invention and to a thermochromic material comprising such crystalline monoclinic VO₂ (M) obtainable by the process of the invention, as well as to coated articles comprising a substrate and a coating wherein the coating comprises crystalline monoclinic VO₂ (M) obtainable by the process of the invention. Details and preferences for the substrate and for the coating layer are as discussed hereinabove. The invention pertains also to an article comprising said thermochromic material comprising such crystalline monoclinic VO₂ (M) obtainable by the process of the invention. The article is for instance a polymer film as discussed hereinabove, for example a single layer or multilayer polymer film as discussed.

The thermochromic material and/or coating material comprises optionally one or more additional components, such as for example one or more doping ions. The doping ions are for instance ions of W, Ta, Nb, Mo, Al, F, or a mixture of these ions.

In conclusion, the invention pertains to methods for the preparation of crystalline monoclinic VO₂. In the inventive method, amorphous VO₂ is annealed in an O₂ containing atmosphere to give crystalline monoclinic VO₂ (M).

As used herein, the term 'typically' indicates features that are used in many but not necessarily all embodiments of the invention.

### Examples

The invention will now be further illustrated by the following non-limiting examples. These examples do not limit the invention and do not limit the claims.

### Example 1

Amorphous VO₂ was prepared using V₂O₅ and oxalic acid as reducing agent, using an example solvothermal procedure at 10-40 bar and a temperature (internal) in the range of 160-260°C, for a duration of at least 24 hours, with excess reducing agent.

### Materials

Vanadium pentoxide (V₂O₅, 99.6%, -10 mesh size) purchased from Alfa Aesar^{™}, oxalic acid (C₂H₂O₄, 98%) purchased from Sigma Aldrich^{™} and Milli-Q^{®} water purified via the Q-POD-Merck^{™} system.

### Example preparation of amorphous VO₂

An aqueous solution of oxalic acid was prepared by dissolving oxalic acid (2.42 g, 26.9 mmol) in 180 ml of water (Milli-Q^{®}), thereafter vanadium pentoxide (0.80/181 g, 4.4 mmol) was added to the solution. The resulting mixture was stirred for 15 minutes at room temperature until a yellow solution was obtained. The solution was then added to a Teflon lined autoclave and was subsequently heated up to 180°C for 24 hours. With these conditions an autogenerated pressure of 12.5 bar was reached. After the autoclave cooled down to room temperature, a black powder was obtained. Besides 180°C, the black powder was obtained in further experiments for example at temperatures ranging from 180°C to 260°C. Subsequently the black powder was washed with both deionized water and ethanol absolute for 2 times. Thereafter, the black powder was dried under vacuum at 40°C for 12 hours. After drying 0.45 g of amorphous VO₂ was obtained.

### Characterization

Differential scanning calorimetry (DSC): DSC was performed with the DSC Discovery Classic system from TA Instruments^{®}. The sample was measured in a hermetic aluminum pan under nitrogen atmosphere, with a heating and cooling rate of 20°C/min.

### Results

A black powder was obtained. The obtained amorphous powder did not exhibit a phase transition in DSC. No crystalline material was observed with XRD.

As a preliminary experiment, the prepared amorphous VO₂ was subjected to thermal treatment under air flow of 25 ml/min in a temperature range of 30°C to 500°C with heating of 10°C/min. Thermogravimetric analysis (TGA) indicated that in this example, decomposition started at about 300°C and oxidation started from 450°C.

### Example 2

### Preparation of crystalline monoclinic VO2 (M)

A sample of the prepared amorphous VO₂ powder (0.45 g) was added to a ceramic crucible at a layer thickness <1mm. The crucible was then placed in the center of a preheated muffle furnace under air at 400 °C for 90 minutes. The crucible was removed from the muffle furnace and monoclinic VO₂ (M) was obtained. Furthermore a weight loss of 18% was observed, the end-product had a final weight of 0.37 g. Besides 400°C, crystalline monoclinic VO₂ (M) was also obtained at example temperatures ranging from 375°C to 450 °C.

### Example 3

### Preparation of crystalline monoclinic VO2 (M)

In this example, 0.45 g of the prepared amorphous VO₂ was transferred to a ceramic crucible and was placed in the centre of a muffle furnace under air. The following temperature programme was used: oven temperature 350°C for 120 min (time T = 0 to T = 120 min), then 375°C for 60 min (T = 120 to 180 min), then 400°C for 90 min (T = 180 to T = 270 min).

**Table 1** shows results for samples taken at the indicated times, and the switching enthalpies measured with DSC.

| Table 1 | | |
|---|---|---|
| Time (min) | Temperature (°C) | Enthalpy (J/g) |
| 5 | 350 | 13.8 |
| 10 | 350 | 16.0 |
| 15 | 350 | 16.9 |
| 20 | 350 | 17.3 |
| 30 | 350 | 20.0 |
| 40 | 350 | 20.8 |
| 50 | 350 | 19.6 |
| 60 | 350 | 19.5 |
| 90 | 350 | 22.6 |
| 120 | 350 | 20.5 |
| 150 | 375 | 24.1 |
| 180 | 375 | 25.9 |
| 210 | 400 | 26.0 |
| 270 | 400 | 28.0 |

For the final product, a switching enthalpy of 33-34 J/g was obtained advantageously.

### Example 4

A sample of the crystalline monoclinic VO₂ (M) prepared according to Example 3 (the final product of Example 3) was dispersed in ethanol (1 wt.% VO₂, 1 wt.% PVP, 98 wt.% ethanol) and drop casted. A transmission change of 4% at 1600 nm IR was achieved for the thermochromic transition (between the hot/cold state, hence above/below switching temperature).

## Claims

1. A method for preparing crystalline monoclinic VO₂ (M), wherein the method comprises annealing amorphous VO₂ in the presence of an oxygen-containing atmosphere at a temperature of at least 200°C.

2. The method according to claim 1, wherein the annealing involves an annealing step under an atmosphere comprising at least 0.10 vol.% O₂.

3. The method according to claim 2, wherein the annealing involves an annealing step under an atmosphere comprising at least 6.0 vol.% O₂, preferably at least 10 vol.% O₂.

4. The method according to claim 3, wherein said annealing step is carried out under air.

5. The method according to any of the preceding claims, wherein said annealing step is carried out at a temperature in the range of 320°C to 600°C under an atmosphere comprising at least 6.0 vol.% O₂.

6. The method according to any of the preceding claims, wherein said amorphous VO₂ is provided as particulate material.

7. The method according to any of the preceding claims, wherein said amorphous VO₂ is provided as a coating layer on a substrate.

8. The method according to any of the preceding claims, wherein the method comprises:
- providing a liquid composition comprising a vanadium (V) precursor, a reducing agent and a solvent;
- allowing the vanadium (V) precursor and the reducing agent to react in the presence of a solvent to provide a vanadium (IV) complex solution;
- precipitating amorphous VO₂ from said vanadium (IV) complex solution in the presence of at least part of said solvent, unreacted reducing agent, and/or reacted reducing agent, thereby obtaining a composition comprising amorphous VO₂; and
- subsequently subjecting said composition to said annealing to provide crystalline monoclinic VO₂ (M).

9. The method according to claim 8, wherein the reducing agent is oxalic acid.

10. The method according to claim 9, wherein said annealing involves an annealing step carried out under an air atmosphere, at a temperature of at least 300°C, and for a duration of at least 10 seconds.

11. The method according to any claims 1-7, wherein the method comprises:
- providing a liquid composition comprising a vanadium (IV) precursor, a complexing agent and a solvent;
- precipitating amorphous VO₂ from said vanadium (IV) complex solution in the presence of at least part of said solvent, and/or at least part of said complexing agent, thereby providing a composition comprising amorphous VO₂; and
- subsequently subjecting said composition to said annealing to provide crystalline monoclinic VO₂ (M).

12. The method according to claim 11, wherein said annealing involves an annealing step carried out under an air atmosphere, at a temperature of at least 300°C, and for a duration of at least 10 seconds.

13. Crystalline monoclinic VO₂ (M) obtainable by the process according to any of claims 1-12.

14. A coated article comprising a substrate and a coating, wherein the coating comprises the crystalline monoclinic VO₂ (M) according to claim 13.

15. A polymer film comprising a layer comprising a polymer matrix and the crystalline monoclinic VO₂ (M) according to claim 13.
